# EUROPEAN PATENT SPECIFICATION

(11) **EP 4 075 229 B1**
(45) Date of publication and mention of the grant of the patent: **22.05.2024**
(21) Application number: 22159532.5
(22) Date of filing: 01.03.2022
(51) Int. Cl.: G05D 1/00

(54) **IMPROVED INSTALLATION FOR A ROBOTIC WORK TOOL**
VERBESSERTE INSTALLATION FÜR EIN ROBOTISCHES ARBEITSWERKZEUG
INSTALLATION AMÉLIORÉE POUR UN OUTIL DE TRAVAIL ROBOTIQUE

(30) Priority: 13.04.2021 SE 2150454
(43) Date of publication of application: 19.10.2022
(73) Proprietor: HUSQVARNA AB, 561 82 Huskvarna (SE)
(72) Inventor: MÅRTENSSON, Anton, 553 33 JÖNKÖPING (SE); PETERSSON, Jimmy, 553 33 JÖNKÖPING (SE); HELLSIN, Beppe, 554 73 JÖNKÖPING (SE); GAZRAWI, Sarkan, 561 38 HUSKVARNA (SE)

(56) References cited:
- EP-A1- 3 203 825
- WO-A1-2020/143972
- US-A1- 2015 271 991

## Description

### TECHNICAL FIELD

This application relates to robotic work tools and in particular to a system and a method for providing an improved installation for a robotic work tool, such as a lawnmower.

### BACKGROUND

Automated or robotic work tools such as robotic lawnmowers are becoming increasingly more popular. In a typical deployment a work area, such as a garden, the work area is enclosed by a boundary with the purpose of keeping the robotic lawnmower inside the work area. The work area may also be limited by objects such as walls or rocks. In modern robotic work tools the boundary is often a virtual boundary such as provided by a map application or stored coordinates in the robotic work tool. Many robotic working tools are arranged to operate and navigate in such a virtually defined work area using a satellite navigations system, such as GNSS, GPS o RTK. The robotic working tool may also or alternatively be arranged to operate or navigate utilizing a beacon-based navigation system, such as UWB. It should be noted that for the purpose of this application there will be made no difference between a beacon and a RTK base station, unless specifically specified.

To operate using virtual boundaries, it is necessary to specify or otherwise define borders, i.e. the boundary, for an installation. The boundary may be specified by drawing in an application executed in a computing device, such as a smartphone or a computer, and then downloaded to the robotic work tool for use. Alternatively or additionally, the boundary may be defined by controlling or steering the robotic work tool along a desired boundary marked by markers that have been placed along the intended boundary, such as by driving marked pegs into the ground temporarily. The robotic work tool may be controlled for example using a remote control, possibly executed by a computing device, such as a smartphone. This enables the user to steer the robotic work tool around a desired workarea and thereby noting the boundary whereby the robotic work tool records all or most positions using the navigation system traversed and defines the boundary based on those positions, such as by recording GPS (or RTK) positions at intervals. Either the robotic work tool defines the boundary internally in a controller or transmits the positions to the computing device which in turn defines the boundary.

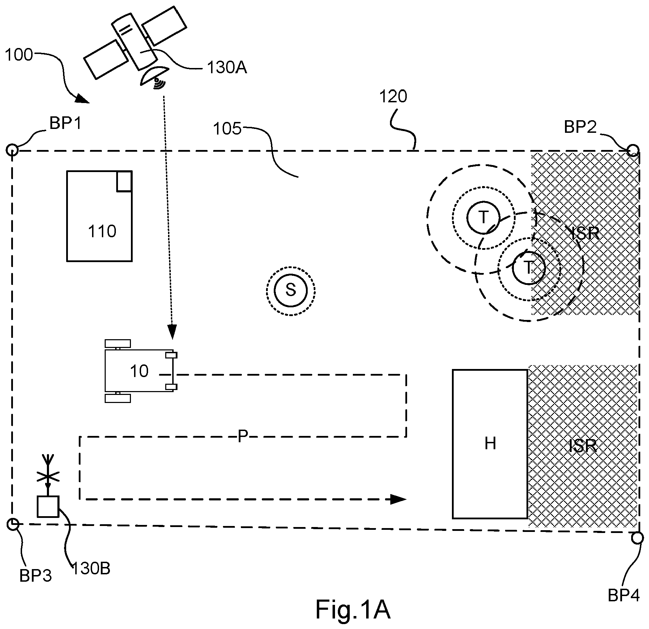

Figure 1A shows a schematic view of an example of a typical work area 105, being a garden, in which a robotic work tool 10, such as a robotic lawnmower, is set to operate.

The garden contains a number of obstacles, exemplified herein by a number (2) of trees (T), a stone (S) and a house structure (H). The trees are marked both with respect to their trunks (filled lines) and the extension of their foliage (dashed lines). The garden comprises or is in the line of sight of at least one signal navigation device 130. In this example the signal navigation device is exemplified as a satellite 130A and a beacon 130B, but it should be noted that it may also be any number of satellites and/or beacons (including 0). The use of satellite and/or beacon navigation enables for a boundary that is virtual 120.

In order to control the robotic working tool more efficiently, the robotic working tool 10 may be connected to a user equipment (not shown in figure 1A), such as a smartphone, executing a robotic working tool control application. The robotic working tool control application receives information from the robotic working tool in order to provide updated status reports to an operator. The operator is also enabled to provide commands to the robotic working tool 10 through the robotic working tool controlling application. The commands may be for controlling the propulsion of the robotic working tool, to perform a specific operation or regarding scheduling of the robotic working tool's operation. This may be utilized to define the boundary as discussed above.

In the example of figure 1A, the robotic working tool is set to operate according to a specific pattern P indicated by the dashed arrow in figure 1A. As the work area may comprise many different structures, and may also be in an area where there are many surrounding structures, some parts of the work area may not provide ample signal reception, i.e. the satellite signals and/or the beacon signals are not received at a quality or strength level that is adequate for proper processing of the signal. In such areas, the robotic work tool may not be able to perform its operation adequately as the navigation may suffer. Such areas are indicated by the shaded areas behind the trees and the house in figure 1A and are referenced ISR (Insufficient Signal Reception).

To supplement the signal navigation device, the robotic work tool may utilize a SLAM (Simultaneous Localization and Mapping) technique such as VSLAM (Visual SLAM). This may enable the robotic work tool to execute the operating pattern P at sufficient accuracy even in areas of insufficient signal reception.

Returning to how the boundary is defined, the boundaries are defined by boundary points which may be given by physical obj ects or in a map application for which the coordinates are transmitted to the robotic work tool. In figure 1A boundary points BP1-BP4 are shown but it should be noted that any number of boundary points may be used. As mentioned the boundary points may be (temporary) physical objects or they may be virtual. Alternatively the user may opt to use a combination of both physical and virtual boundary points. The coordinates for a physical boundary point will be noted and recorded as the physical object is encountered by the robotic work tool for example during installation.

The accuracy of determining the location of these points during operation is dependent on the variance of the estimation of the robotic work tool position. When the robotic work tool is in an open sky position the signal navigation system, such as an RTK system, will deliver positions with very high accuracy, typically within 2 cm. However, when driving into a RTK shadow (where the signal reception may be insufficient, i.e. ISR areas) the variance will grow since the estimation of the position will be worse. The positions of the boundary points defined in the RTK shadow will not be accurate and the correct position will not be stored in the boundary map in the robotic work tool.

It should be noted herein that for the purpose of this text, there will be made no difference between variance and covariance, except is explicitly specified.

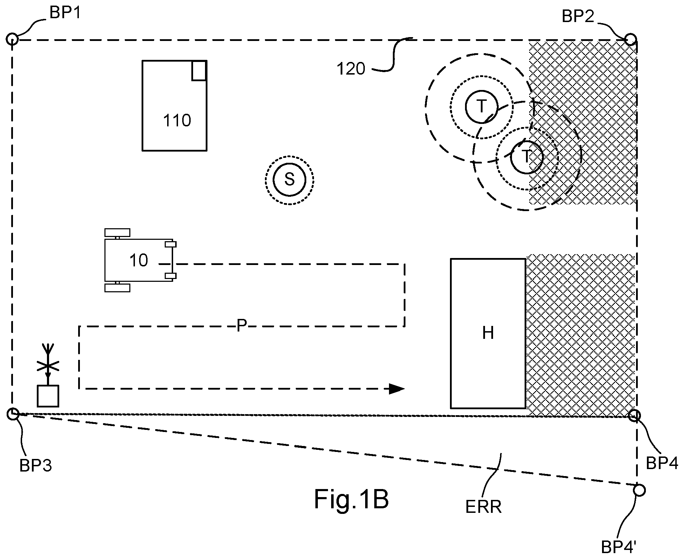

Figure 1B shows an example situation where an example boundary point B04 is incorrectly determined as indicated by the reference BP4'. As can be seen the virtual boundary thus experienced by the robotic work tool is significantly altered with a large section outside the actual work area being accessible to the robotic work tool. In figure 1B this area is referenced ERR (ERROR). Such situations are common after installation.

Previous attempts at finding solutions for reducing errors due to bad signal reception includes adding beacons and/or to navigate using deduced reckoning. Adding beacons adds to the manual labour needed and also affects the aesthetics of a work area. Deduced reckoning may, however, not be accurate enough for precise operation patterns and the accuracy of deduced reckoning also diminishes over time requiring recalibrations. The deduced reckoning is also highly affected by environmental factors imposing for example wheel slip when the work area is muddy or otherwise slippery.

The patent published as EP3203825B 1 discloses a method of mowing an area with an autonomous mowing robot comprises storing, in non-transient memory of the robot, a set of geospatially referenced perimeter data corresponding to positions of the mowing robot as the mowing robot is guided about a perimeter of an area to be mowed, removing from the set of perimeter data one or more data points thereby creating a redacted data set and controlling the mowing robot to autonomously mow an area bounded by a boundary corresponding to the redacted data set, including altering direction of the mowing robot at or near a position corresponding to data in the redacted data set so as to redirect the robot back into the bounded area.

The patent application published as US20150271991A1 discloses a robot lawnmower includes a robot body, a drive system, a localizing system, a teach monitor, and a controller in communication with one another. The drive system is configured to maneuver the robot lawnmower over a lawn. The teach monitor determines whether the robot lawnmower is in a teachable state. The controller includes a data processing device and non-transitory memory in communication with the data processing device. The data processing device executes a teach routine when the controller is in a teach mode for tracing a confinement perimeter around the lawn as a human operator pilots the robot lawn mower, when the robot lawnmower is in the teachable state, the teach routine stores global positions determined by the localizing system in the non-transitory memory, and when the robot lawnmower is in the unteachable state, the teach routine issues an indication of the unteachable state.

Thus, there is a need for an improved manner of enabling a robotic working tool to continue operation even in areas with bad signal reception at high accuracy even after installation.

### SUMMARY

It is therefore an object of the teachings of this application to overcome or at least reduce those problems by providing a robotic work tool system comprising a robotic working tool arranged to operate in a work area defined by a boundary, the robotic working tool comprising a signal navigation device, and a controller, wherein the controller is configured to: determine a location of at least one boundary point (BP); determine a variance of the location(s); and to determine the boundary based on the variance of the location(s) utilizing the innermost of the variance(s) by creating an inner envelope using intersections of tangents for variance circles, where the innermost tangent(s) is used, where a variance circle is defined as a singular variance, i.e. a circle around the boundary point's location.

The robotic work tool system further comprises an optical navigation sensor, wherein the controller is further configured to follow an intended boundary defined by boundary points in a first direction using the optical navigation sensor to record features utilizing SLAM.

It should be noted that the variance may also be a covariance.

In some embodiments the controller is further configured to determine the boundary based on the variance of the location(s) utilizing the innermost of the variance(s) by generating an inner envelope of the at least one boundary point (BP) .

In some embodiments the controller is further configured to determine that the location of boundary point is inaccurate and in response thereto determine the variance as the variance of the inaccuracy.

In some embodiments the controller is further configured to determine that the location of a boundary point is inaccurate by determining that the boundary point is in an area of insufficient signal reception (ISR).

In some embodiments the controller is further configured to determine that an area is an area of insufficient signal reception (ISR) based on the number of signals and/or the quality of the signal(s) received by the signal navigation device.

In some embodiments the controller is further configured to follow the boundary in a second (opposite) direction using the optical navigation sensor to record features utilizing SLAM.

In some embodiments the controller is further configured to follow the boundary before an installation process.

In some embodiments the controller is further configured to follow the boundary after an installation process. In some embodiments the robotic work tool system further comprises a charging station, wherein the controller is further configured to follow the boundary on its way to the charging station in selectively the first and the second direction.

In some embodiments the robotic work tool system further comprises a charging station, wherein the controller is further configured to follow the boundary on its way to the charging station in selectively the first and the second direction through an area of insufficient signal reception (ISR).

In some embodiments the robotic work tool is a robotic lawnmower.

In some embodiments the robotic work tool is configured to be remote controlled by a user equipment.

It is also an object of the teachings of this application to overcome the problems by providing a method for use in a robotic work tool system comprising a robotic working tool, the robotic working tool comprising a signal navigation device, wherein the method comprises: determining a location of at least one boundary point (BP); determining a variance of the location(s); and to determining the boundary based on the variance of the location(s) utilizing the innermost of the variance(s) as per the claims.

The robotic work tool system further comprises an optical navigation sensor, wherein the method further comprises following an intended boundary in a first direction using the optical navigation sensor to record features utilizing SLAM.

In some embodiments the method further comprises providing a representation of the boundary through a user equipment, wherein the representation of the boundary indicates the accuracy of at least one boundary point.

In some embodiments the method further comprises receiving user input to change the at least one boundary point.

### BRIEF DESCRIPTION OF THE DRAWINGS

The invention will be described in further detail under reference to the accompanying drawings in which:
Figure 1A shows an example of a robotic work tool system being a robotic lawnmower system;
Figure 1B shows an example of a robotic work tool system being a robotic lawnmower system;
Figure 2A shows an example of a robotic lawnmower according to some embodiments of the teachings herein;
Figure 2B shows a schematic view of the components of an example of a robotic work tool being a robotic lawnmower according to some example embodiments of the teachings herein;
Figure 2C shows a schematic view of the components of an example of a computing device arranged to operate a robotic work tool controlling application for being connected to a robotic work tool according to some example embodiments of the teachings herein;
Figure 3A shows a schematic view of a robotic work tool system according to some example embodiments of the teachings herein;
Figure 3B shows a schematic view of the robotic work tool system of figure 3A in a situation according to some example embodiments of the teachings herein;
Figure 3C shows a schematic view of the robotic work tool system of figure 3A and figure 3B in a situation according to some example embodiments of the teachings herein;
Figure 3D shows a schematic view of the robotic work tool system of figure 3A, 3B and figure 3C in a situation according to some example embodiments of the teachings herein
Figure 4A shows a schematic view of a robotic work tool system according to some example embodiments of the teachings herein;
Figure 4B shows a schematic view of the robotic work tool system according to some example embodiments of the teachings herein;
Figure 5 shows a corresponding flowchart for a method according to some example embodiments of the teachings herein; and
Figure 6 shows a schematic view of a user equipment as in figure 2C according to some example embodiments of the teachings herein.

### DETAILED DESCRIPTION

It should be noted that even though the description given herein will be focused on robotic lawnmowers, the teachings herein may also be applied to, robotic ball collectors, robotic mine sweepers, robotic farming equipment, or other robotic work tools where a work tool is to be safeguarded against from accidentally extending beyond or too close to the edge of the robotic work tool.

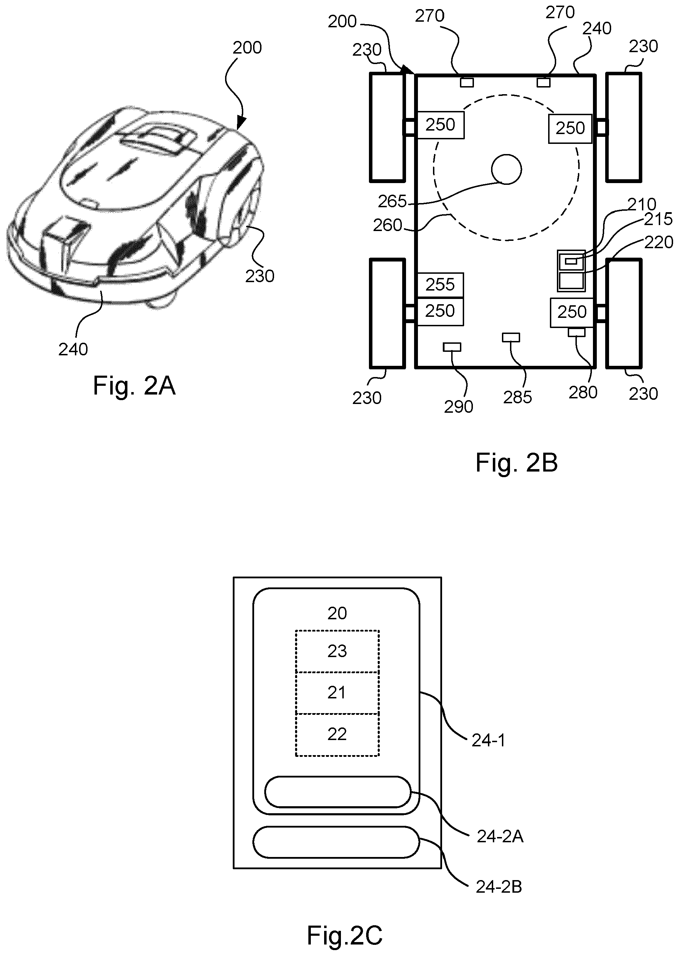

Figure 2A shows a perspective view of a robotic work tool 200, here exemplified by a robotic lawnmower 200, having a body 240 and a plurality of wheels 230 (only one side is shown). The robotic work tool 200 may be a multi-chassis type or a mono-chassis type (as in figure 2A). A multi-chassis type comprises more than one main body parts that are movable with respect to one another. A mono-chassis type comprises only one main body part.

It should be noted that even though the description herein is focussed on the example of a robotic lawnmower, the teachings may equally be applied to other types of robotic work tools, such as robotic floor grinders, robotic floor cleaners to mention a few examples where a work tool should be kept away from the edges for safety or convenience concerns.

It should also be noted that the robotic work tool is a self-propelled robotic work tool, capable of autonomous navigation within a work area, where the robotic work tool propels itself across or around the work area in a pattern (random or predetermined).

Figure 2B shows a schematic overview of the robotic work tool 200, also exemplified here by a robotic lawnmower 200. In this example embodiment the robotic lawnmower 200 is of a mono-chassis type, having a main body part 240. The main body part 240 substantially houses all components of the robotic lawnmower 200. The robotic lawnmower 200 has a plurality of wheels 230. In the exemplary embodiment of figure 2B the robotic lawnmower 200 has four wheels 230, two front wheels and two rear wheels. At least some of the wheels 230 are drivably connected to at least one electric motor 250. It should be noted that even if the description herein is focused on electric motors, combustion engines may alternatively be used, possibly in combination with an electric motor. In the example of figure 2B, each of the wheels 230 is connected to a common or to a respective electric motor 250 for driving the wheels 230 to navigate the robotic lawnmower 200 in different manners. The wheels, the motor 250 and possibly the battery 255 are thus examples of components making up a propulsion device. By controlling the motors 250, the propulsion device may be controlled to propel the robotic lawnmower 200 in a desired manner, and the propulsion device will therefore be seen as synonymous with the motor(s) 250.

The robotic lawnmower 200 also comprises a controller 210 and a computer readable storage medium or memory 220. The controller 210 may be implemented using instructions that enable hardware functionality, for example, by using executable computer program instructions in a general-purpose or special-purpose processor that may be stored on the memory 220 to be executed by such a processor. The controller 210 is configured to read instructions from the memory 220 and execute these instructions to control the operation of the robotic lawnmower 200 including, but not being limited to, the propulsion and navigation of the robotic lawnmower.

The controller 210 in combination with the electric motor 250 and the wheels 230 forms the base of a navigation system (possibly comprising further components) for the robotic lawnmower, enabling it to be self-propelled as discussed under figure 2A,

The controller 210 may be implemented using any suitable, available processor or Programmable Logic Circuit (PLC). The memory 220 may be implemented using any commonly known technology for computer-readable memories such as ROM, FLASH, DDR, or some other memory technology.

The robotic lawnmower 200 is further arranged with a wireless communication interface 215 for communicating with a computing device 30 and possibly also with other devices, such as a server, a personal computer, a smartphone, the charging station, and/or other robotic work tools. Examples of such wireless communication protocols are Bluetooth^{®}, WiFi^{®} (IEEE802. 1 1b), Global System Mobile (GSM) and LTE (Long Term Evolution), to name a few. The robotic lawnmower 200 is specifically arranged to communicate with a user equipment for providing information regarding status, location, and progress of operation to the user equipment as well as receiving commands or settings from the user equipment.

The robotic lawnmower 200 also comprises a grass cutting device 260, such as a rotating blade 260 driven by a cutter motor 265. The grass cutting device being an example of a work tool 260 for a robotic work tool 200. As a skilled person would understand the cutter motor 265 is accompanied or supplemented by various other components, such as a drive shaft to enable the driving of the grass cutting device, taken to be understood as included in the cutter motor 265. The cutter motor 265 will therefore be seen as representing a cutting assembly 265 or in the case of another work tool, a work tool assembly 265.

The robotic lawnmower 200 further comprises at least one optical navigation sensor 285. The optical navigation sensor may be a camera-based sensor and/or a laser-based sensor. In an robotic work tool according to the present teachings, the robotic work tool comprises specifically a navigation sensor 285 being arranged to perform SLAM navigation (Simultaneous Localization And Mapping) in cooperation with the controller 210 (possibly a dedicated controller part of the sensor, but seen as part of the main controller 210 herein). In the case the navigation sensor is camera-based, it is arranged to perform VSLAM (Visual Simultaneous Localization And Mapping). Camera-based sensors have an advantage over laser-based sensors in that they are generally cheaper and also allow for other usages.

Although referred to as an optical sensor, the navigation sensor 285 may, in some embodiments also be radar based.

The robotic lawnmower 200 further comprises at least one signal navigation sensor, such as a beacon navigation sensor and/or a satellite navigation sensor 290.

The beacon navigation sensor may be a Radio Frequency receiver, such as an Ultra Wide Band (UWB) receiver or sensor, configured to receive signals from a Radio Frequency beacon, such as a UWB beacon. Alternatively or additionally, the beacon navigation sensor may be an optical receiver configured to receive signals from an optical beacon.

The satellite navigation sensor may be a GPS (Global Positioning System) device, Real-Time Kinetics (RTK) or other Global Navigation Satellite System (GNSS) device. In embodiments, where the robotic lawnmower 200 is arranged with a navigation sensor. In some embodiments, the work area may be specified as a virtual work area in a map application stored in the memory 220 of the robotic lawnmower 200. The virtual work area may be defined by a virtual boundary as discussed in the background section.

As would be understood by a skilled person, the robotic work tool may comprise more than one navigation sensor, and they may be of different types. In the examples that will be discussed herein the satellite navigation sensor 290 is a satellite navigation sensor such as GPS, GNSS or a supplemental satellite navigation sensor such as RTK. The satellite navigation sensor 290 is supplemented by an optical navigation sensor 285 being a camera used for providing VSLAM.

As mentioned above, the robotic work tool may be configured to generate or use a map of the work area to be operated in. VSLAM (Visual Simultaneous localization and mapping) is a method to build up a 3D map of features from a video stream when exploring an environment (garden). These features are tracked between each video frame and if they are classified as good features the 3D position of the features is estimated and added to the map. For each video frame features are identified in the image and compared with the features in the map, a new position of the mower can be estimated, and new feature are added to the map. The position together with its covariance (accuracy) is delivered to the mower. In a pure VSLAM system (no RTK) the accuracy (large covariance) of the estimated mower position will not be very good in the beginning due to few features in the map/incomplete map, but the position will be better and better while the map builds up. As mentioned in the background section, it should be noted herein that for the purpose of this text, there will be made no difference between variance and covariance, except is explicitly specified. Variance and covariance will thus be used intermittently but both are possible alternatives for the teachings according to herein.

The robotic lawnmower 200 may also or alternatively comprise deduced reckoning sensors 280. The deduced reckoning sensors may be odometers, accelerometer or other deduced reckoning sensors. In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel. The deduced reckoning sensors may operate in addition to the optical navigation sensor 285. The deduced reckoning sensors may alternatively or additionally operate in coordination with the optical navigation sensor 285, so that SLAM/VSLAM navigation is improved.

As mentioned above, the robotic lawnmower 200 is arranged to operate according to a map of the work area 305 (and possibly the surroundings of the work area 305) stored in the memory 220 of the robotic lawnmower 200. The map may be generated or supplemented as the robotic lawnmower 200 operates or otherwise moves around in the work area 305.

Figure 2C shows a schematic view of a computing device, such as a user equipment 20 according to an embodiment of the present invention. In one example embodiment, the viewing device 20 is a smartphone, smartwatch or a tablet computer. The user equipment 20 comprises a controller 21 a memory 22 and a user interface 24.

It should be noted that the user equipment 20 may comprise a single device or may be distributed across several devices and apparatuses.

The controller 21 is configured to control the overall operation of the user equipment 20 and specifically to execute a robotic work tool controlling application. In some embodiments, the controller 21 is a specific purpose controller. In some embodiments, the controller 21 is a general purpose controller. In some embodiments, the controller 21 is a combination of one or more of a specific purpose controller and/or a general purpose controller. As a skilled person would understand there are many alternatives for how to implement a controller, such as using Field -Programmable Gate Arrays circuits, ASIC, GPU, NPU etc. in addition or as an alternative. For the purpose of this application, all such possibilities and alternatives will be referred to simply as the controller 21.

The memory 22 is configured to store data such as application data, settings and computer-readable instructions that when loaded into the controller 21 indicates how the user equipment 20 is to be controlled. The memory 22 is also specifically for storing the robotic work tool controlling application and data associated therewith. The memory 22 may comprise several memory units or devices, but they will be perceived as being part of the same overall memory 22. There may be one memory unit for the robotic work tool controlling application storing instructions and application data, one memory unit for a display arrangement storing graphics data, one memory for the communications interface 23 for storing settings, and so on. As a skilled person would understand there are many possibilities of how to select where data should be stored and a general memory 22 for the user equipment 20 is therefore seen to comprise any and all such memory units for the purpose of this application. As a skilled person would understand there are many alternatives of how to implement a memory, for example using nonvolatile memory circuits, such as EEPROM memory circuits, or using volatile memory circuits, such as Robotic work tool memory circuits. For the purpose of this application all such alternatives will be referred to simply as the memory 22.

In some embodiments the user equipment 20 further comprises a communication interface 23. The communications interface 23 is configured to enable the user equipment 20 to communicate with robotic work tools, such as the robotic work tool of figures 2A and 2B.

The communication interface 23 may be wired and/or wireless. The communication interface 23 may comprise several interfaces.

In some embodiments the communication interface 23 comprises a radio frequency (RF) communications interface. In one such embodiment the communication interface 23 comprises a Bluetooth^{™} interface, a WiFi^{™} interface, a ZigBee^{™} interface, a RFID^{™} (Radio Frequency IDentifier) interface, Wireless Display (WiDi) interface, Miracast interface, and/or other RF interface commonly used for short range RF communication. In an alternative or supplemental such embodiment the communication interface 23 comprises a cellular communications interface such as a fifth generation (5G) cellular communication interface, an LTE (Long Term Evolution) interface, a GSM (Global Systéme Mobilé) interface and/or other interface commonly used for cellular communication. In some embodiments the communication interface 23 is configured to communicate using the UPnP (Universal Plug n Play) protocol. In some embodiments the communication interface 23 is configured to communicate using the DLNA (Digital Living Network Appliance) protocol.

In some embodiments, the communication interface 23 is configured to enable communication through more than one of the example technologies given above. The communications interface 23 may be configured to enable the user equipment 20 to communicate with other devices, such as other smartphones.

The user interface 24 comprises one or more output devices and one or more input devices. Examples of output devices are a display arrangement, such as a display screen 24-1, one or more lights (not shown in figure 1A) and a speaker (not shown). Examples of input devices are one or more buttons 24-2 (virtual 24-2A or physical 24-2B), a camera (not shown) and a microphone (not shown). In some embodiments, the display arrangement comprises a touch display 24-1 that act both as an output and as an input device being able to both present graphic data and receive input through touch, for example through virtual buttons 24-2A.

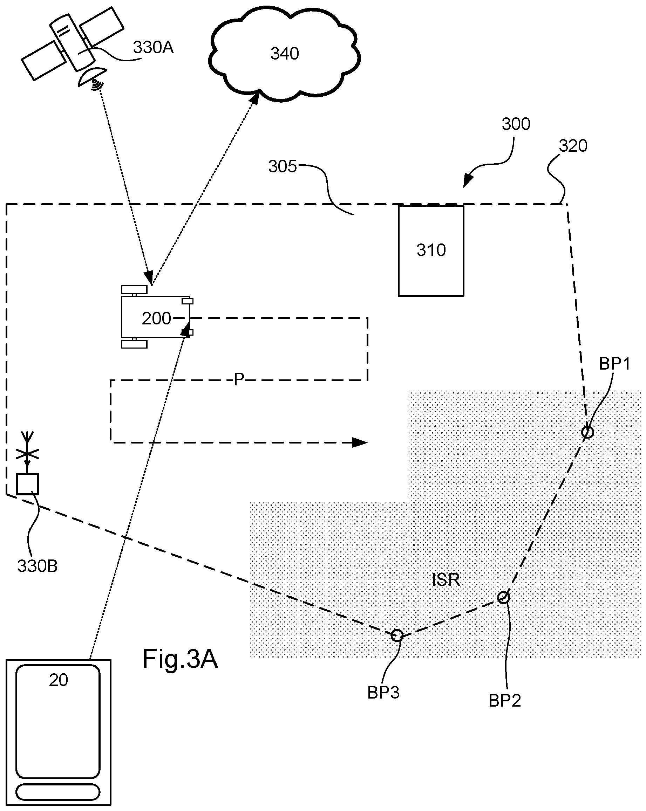

Figure 3A shows a schematic view of a robotic work tool system 300 in some embodiments. The schematic view is not to scale. The robotic work tool system 300 of figure 3A, corresponds in many aspects to the robotic work tool system 100 of figure 1, except that the robotic work tool system 300 of figure 3A comprises a robotic work tool 200 according to the teachings herein. It should be noted that the work area shown in figure 3A is simplified for illustrative purposes but may contain some or all of the features of the work area of figure 1A, and even other and/or further features as will be hinted at below.

As with figures 2A and 2B, the robotic work tool 200 is exemplified by a robotic lawnmower, whereby the robotic work tool system may be a robotic lawnmower system or a system comprising a combinations of robotic work tools, one being a robotic lawnmower, but the teachings herein may also be applied to other robotic work tools adapted to operate within a work area.

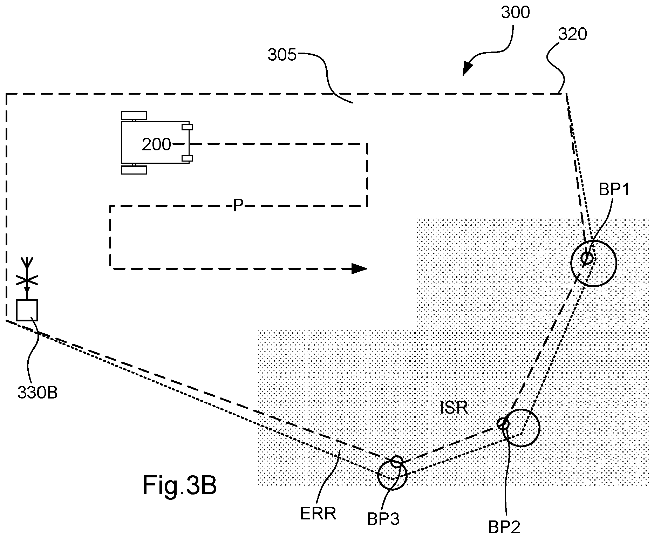

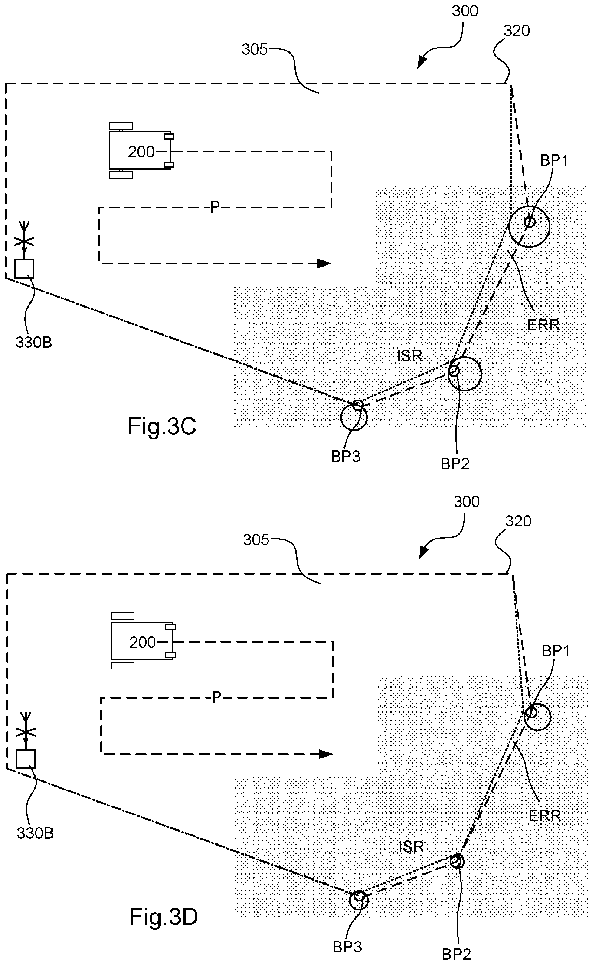

The robotic work tool system 300 comprises a charging station 310 which in some embodiments where the robotic work tool 200 is able to recharge its battery 255. The robotic working tool system 300 is further arranged to utilize at least one signal navigation device 330. In the example of figure 3 two options are shown, a first being at least one satellite 330A (only one shown, but it should be clear that a minimum of three are needed for an accurate three 2 dimensional location). The second option being at least one beacon, such as an RTK beacon 330B (only one shown).

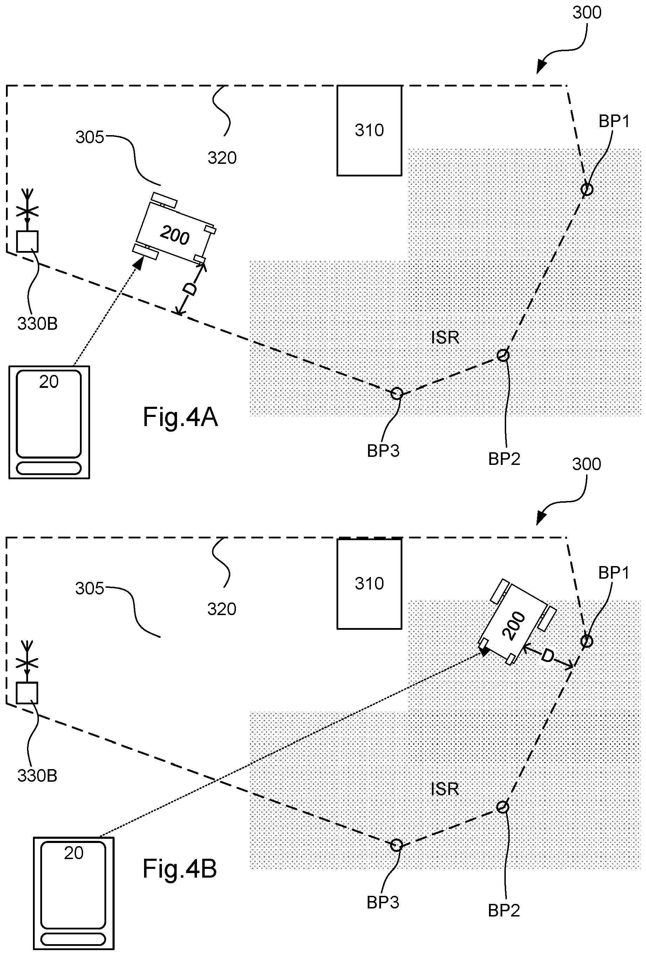

The work area 305 is in this application exemplified as a garden, but can also be other work areas as would be understood. As hinted at above, the garden may contain a number of obstacles, for example a number of trees, stones, slopes and houses or other structures. In some embodiments the robotic work tool is arranged or configured to traverse and operate in a work area that is not essentially flat, but contains terrain that is of varying altitude, such as undulating, comprising hills or slopes or such. The ground of such terrain is not flat and it is not straightforward how to determine an angle between a sensor mounted on the robotic work tool and the ground. The robotic work tool is also or alternatively arranged or configured to traverse and operate in a work area that contains obstacles that are not easily discerned from the ground. Examples of such are grass or moss covered rocks, roots or other obstacles that are close to ground and of a similar colour or texture as the ground. The robotic work tool is also or alternatively arranged or configured to traverse and operate in a work area that contains obstacles that are overhanging, i.e. obstacles that may not be detectable from the ground up, such as low hanging branches of trees or bushes. Such a garden is thus not simply a flat lawn to be mowed or similar, but a work area of unpredictable structure and characteristics. The work area 305 exemplified with referenced to figure 4, may thus be such a non-uniform work area as disclosed in this paragraph that the robotic work tool is arranged to traverse and/or operate in.

The robotic working tool system 300 also comprises or is arranged to be connected to a user equipment 20 such as the user equipment of figure 2C. As discussed above the user equipment 20 is configured to execute a robotic working tool controlling application that receives information from the robotic working tool 200 and is able to provide commands to the robotic working tool 200.

The robotic working tool system 300 may alternatively or additionally comprise or be arranged to be connected to a server application, such as a cloud server application 340. The connection to the server application 340 may be direct from the robotic working tool 200, direct from the user equipment 20, indirect from the robotic working tool 200 via the charging station, and/or indirect from the robotic working tool 200 via the user equipment.

In the below several embodiments of how the robotic work tool may be adapted will be disclosed.

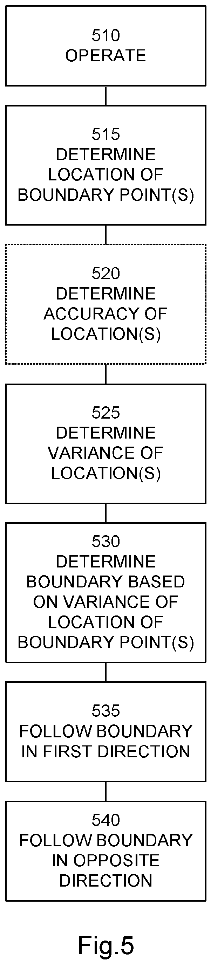

Figure 5 shows a flowchart for a general method according to herein. The method is for use in a robotic work tool as in figures 2A and 2B. The improved manner for handling error codes as discussed herein will be discussed with simultaneous reference to figures 3A, 3B, 3C, 3D, 4A, 4B and figure 5.

Figure 3A shows examples of areas where signal reception may not be reliable, i.e. areas of inferior signal reception. Such areas are defined as areas where a sufficient number of signals is not received at a signal quality exceeding a threshold value. The sufficient number is dependent on the application and requirements of the operation as a skilled person would understand. In figure 3A, the areas are shown as shaded and referenced ISR. In the example of figure 3A there are three boundary points BP1-BP3 in the ISR. It should be noted that this is only an example and any number of boundary points may be in an ISR. Due to the reduced signal quality in the ISR, the location of the boundary points may not be accurately determined.

Figure 3B shows an example where the location of the boundary points are inaccurately determined. The wider size of the circles by the boundary points BP1-BP3 in figure 3B indicate that the variance (or covariance) of the determination is greater in the ISR, than required or desired. As can be seen the wider circles still overlap with the desired boundary point, and the location may thus only be inaccurate and not necessarily incorrect. As a result, the boundary wire may be determined to be as the dotted lines connecting the detected boundary points - compared to the dashed lines connecting the actual boundary points. As is indicated in figure 3B this results in an erroneous area ERR of the work area being added which may lead to that the robotic work tool 200 is allowed to operate outside the intended work area 305. The erroneous area ERR may even extend outside the ISR based on the boundary points distribution in the work area.

To overcome this, the inventors have realized by creating an inner envelope using only the innermost points of the (inaccurately) determined boundary points, the erroneous area is minimized and also made to be enclosed inside the actual work area.

In some embodiments, where the variance of a boundary point may be seen as a singular variance, i.e. a circle around the boundary point's location, the inner envelope may be generated by intersections of tangents for these variance circles, where the innermost tangent(s) is used.

As mentioned before there is made no difference between variance and covariance in this text, and the terminology variance is thus used to referrer to both variance (circular) and to covariance (elliptical). Variance is thus seen to include covariance.

Figure 3C shows the situation where the innermost point of the (inaccurately) determined boundary points are used, resulting in an erroneous area ERR being of a smaller size and enclosed in the work area 305. As indicated by "inaccurately" being within parenthesis, the robotic work tool may be configured to apply this to only the boundary points showing a variance exceeding a threshold level or to all boundary points, regardless of variance. That the variance exceeds a threshold level may be determined by the signal quality (possibly including the signal strength and/or number of signals) of the navigation signals fall below corresponding values.

That the variance exceeds a threshold level may be determined based on that the robotic work tool enters an area of insufficient signal reception.

The variance of the determined location of the boundary point is, in some embodiments, determined based on the received signal quality. Alternatively or additionally, the variance of the determined location of the boundary point is, in some embodiments, determined based on the determination of the location being the calculated or associated variance of the determination. Alternatively or additionally, the variance of the determined location of the boundary point is, in some embodiments, determined based on default values.

As the robotic work tool 200 is operating 510 in the work area 305 and the robotic work tool determines 515 the location of a boundary point, the robotic work tool determines 525 a variance for the location of the boundary point(s). This may be repeated for more than one boundary point. The robotic work tool 200 determines 530 the boundary 320 based on the variance for the boundary point(s). The boundary 320 may be determined as an inner envelope of the innermost point(s) of the boundary point(s).

As indicated above, the robotic work tool may optionally also determine 520 whether the boundary point is inaccurate (such as being in an ISR). And if so, only determine the variance and so on for the boundary points determined to be inaccurate.

As discussed above, the robotic work tool is enabled to operate using (V)SLAM in combination with the GPS/RTK navigation. This may be used to reduce the variance of the location(s) of the boundary points.

In some embodiments the innermost point is determined to be the point that is closest to a center of an area that is defined by the detected boundary points.

Figure 3D shows the situation where the innermost point of the (inaccurately) determined boundary points are used, and after the feature map of a (V)SLAM navigation has been built up, resulting in a lower variance of the boundary points. As can be seen in figure 3D, this provides an erroneous area ERR being of a smaller size than in figure 3C.

However, the SLAM navigation may require some time before it is running accurately enough as it requires several passes of a work area to properly map it, which does not help directly or shortly after installation. However, as the inventors have realized, the quality or accuracy of an installation may be improved upon quite significantly if the robotic work tool is operated, remotely by the user (as in before or after installation) and/or automatically by the robotic work tool (as in after installation), to follow the boundary as defined by the boundary points to record the features in the vicinity of the boundary points. This will generate (at least) a (rudimentary) map of the features, and in the area where it is most crucial for the definition of the boundary. This will enable the boundary 320 to be generated at a higher accuracy than the remainder of the work area 305, which is beneficial for enabling the robotic work tool 200 to remain within the intended work area 305.

In order to further improve on the recording of such features and to do so rapidly, the inventors are proposing to not only traverse the work area in the vicinity of the boundary point, but to do so in a structured manner by first following the boundary in one direction, and then in the other, opposite, direction. As indicated above, this may be done before the actual installation is performed which will generate a rudimentary map of the work area, which can also be used for deploying the virtual boundary points on a user equipment 20 or other computing device. Alternatively or additionally, this may be done after installation to improve on the installation and the accuracy of the determination of the locations for the boundary points. Of course, it is possible to do such runs both before and after the installation process; definition of boundary points. The robotic work tool may be arranged to traverse the whole boundary 320 or only in the areas where the boundary points show a great variance, i.e. in ISRs.

The robotic work tool 200 is thus configured, in some embodiments, to follow 535 the boundary 320 in the vicinity of boundary points BP1-BP3 using (V)SLAM recording features. The robotic work tool 200 may also be configured, in some embodiments, to follow 540 the boundary 320 in the vicinity of boundary points BP1-BP3 in an opposite direction using (V)SLAM recording features.

This will enable the robotic work tool to arrive at an example situation as in figure 3D from the example situation of figure 3C more rapidly
Figure 4A shows a schematic view of a robotic work tool system 300, such as those of figures 3A, 3B, 3C and 3D, according to some embodiments herein wherein a robotic work tool 200 is controlled (remotely and/or automatically) to follow an intended boundary 320 in a first direction.

Figure 4B shows a schematic view of a robotic work tool system 300, such as those of figures 3A, 3B, 3C and 3D, according to some embodiments herein wherein a robotic work tool 200 is controlled (remotely and/or automatically) to follow the intended boundary 320 in a second (opposite) direction.

As is indicated in figures 4A and 4B, the robotic work tool 200 is, in some embodiments, configured to follow the boundary wire at a distance D. The distance may be varied in repeated runs, to provide different perspectives of the features, ensuring that a more accurate image of the features is generated.

As is also indicated in figures 4A and 4B the robotic work tool 200 may be configured to follow the boundary along the whole boundary or only through the areas of insufficient signal reception (ISR).

In some embodiments, the robotic work tool 200 is configured to follow the boundary on the way to the charging station 310 - even if not needed as satellite navigation is used. This will allow for an efficient use of robotic work tool operating time while improving the accuracy of the boundaries. In some such embodiments, the robotic work tool 200 is configured to select a direction that takes the robotic work tool 200 through at least one ISR. In some such embodiments, the direction is selected alternatively so that the robotic work tool makes sure it traverses an ISR in opposite directions on subsequent runs.

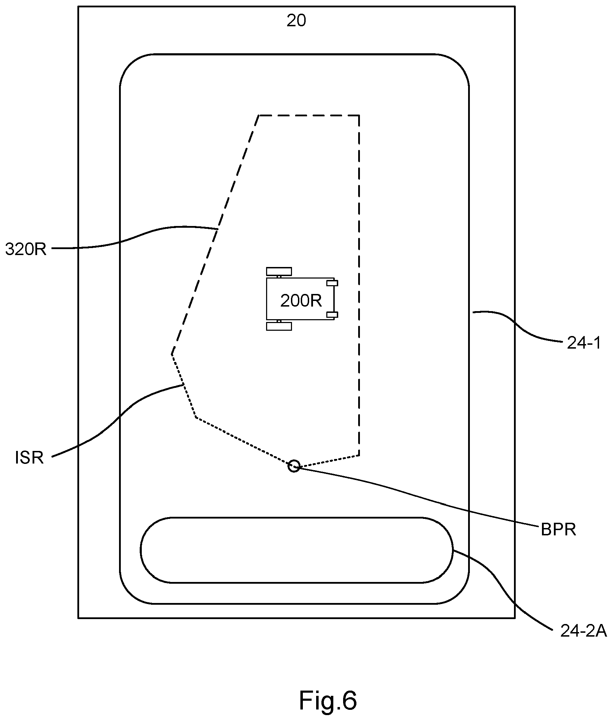

Figure 6 shows a schematic view of a user equipment 20 as in figure 2C. In order to enable an accurate control of the robotic work tool 200, the user equipment 20 is enabled to execute a robotic work tool controlling application as discussed in the above. In some embodiments the user equipment is configured to provide a representation of the boundary 320R through the user interface 24 of the user equipment 20, such as by displaying a graphical representation on the display 24-1. In order to enable the remote control of the robotic work tool 200, the user equipment 200 may also be enabled to receive commands through the user interface 24 such as through virtual controls 24-2A which commands are transmitted to the robotic work tool for execution by the robotic work tool 200. A graphical representation 200R of the robotic work tool may also be displayed to improve the control of the robotic work tool through the user equipment. In some embodiments, the control of the robotic work tool 200 may be through manipulation through the user interface 24 of the graphical representation of the robotic work tool 200.

Graphical representations BPR of boundary points may also be shown. By allowing the user to manipulate the graphical representations BPR of boundary points through the user interface 24 the locations of the boundary points may be amended, corrected or changed. As indicated in figure 6, the representation of the boundary 320R may be presented so that any areas of lower inaccuracies (such as in ISRs) may be indicated to a user. In the example of figure 6, this is indicated by displaying the boundary representation 320R differently where it is inaccurate. This will enable a user to make sure that all areas of inaccuracies are traversed (repeatedly) to generate SLAM features for increasing the accuracy of the location determination.

Furthermore, in embodiments where the user is presented with indications (for example graphical such as through different line styles and/or colors) of the variance or accuracy of sections of the boundary, the user may also be provided with an ability to provide input for changing such as moving the boundary points. The boundary points could be changed to increase the accuracy of the boundary point - for example to an area with better reception. The boundary point could also be moved to update or correct the location of the boundary point. The user may also be provided with opportunities to add boundary points.

For example: boundary points with lower inaccuracies may be indicated to the user. The user could input information to redefine the boundary in these areas by for example moving the boundary points in interface of the user equipment or by defining parts of the boundary by controlling the operation of the robotic work tool to those boundary points (or the area around them) again and put new points.

As the (V)SLAM system will build up more features as the robotic work tool operates, it may be beneficial to hold off on redefining too many points at an initial stage. The rwt system is therefore in some embodiments configured, in the user device or in the robotic work, to determine that the variance in a segment of the boundary, possibly the whole boundary) is below a threshold and in response thereto indicate to a user that the area is mature for redefining. The robotic work tool can accomplish this by measuring the accuracy of boundary points when driving close to the boundary (during normal operation). If the accuracy is good the user could be informed that it's possible to redefine parts of the installation since the system now have more information about the area.

## Claims

1. A robotic work tool system (300) comprising a robotic working tool (200) arranged to operate in a work area defined by a boundary (320), the robotic working tool (200) comprising a signal navigation device (290), an optical navigation sensor (285), and a controller (210), wherein the controller (210) is configured to:
follow an intended boundary as defined by one or more boundary points (BP) in a first direction using the optical navigation sensor (285) to record features utilizing SLAM;
determine (515) a location of at least one of the boundary points (BP);
determine (525) a variance of the location(s); and **characterized by** being further configured to
determine the boundary (320) based on the variance of the location(s) utilizing the innermost of the variance(s) by creating an inner envelope using intersections of tangents for variance circles, where the innermost tangent(s) is used, where a variance circle is defined as a singular variance, i.e. a circle around the boundary point's location.

2. The robotic work tool system (300) according to claim 1, wherein the controller is further configured to
determine the boundary (320) based on the variance of the location(s) utilizing the innermost of the variance(s) by generating an inner envelope of the at least one boundary point (BP).

3. The robotic work tool system (300) according to any preceding claim, wherein the controller is further configured to determine (520) that the location of a boundary point is inaccurate and in response thereto determine the variance as the variance of the inaccuracy.

4. The robotic work tool system (300) according to any preceding claim, wherein the controller is further configured to determine (520) that the location of boundary point is inaccurate by determining that the boundary point is in an area of insufficient signal reception (ISR).

5. The robotic work tool system (300) according to any preceding claim,
wherein the controller is further configured to
determine that an area is an area of insufficient signal reception (ISR) based on the number of signals and/or the quality of at least one of the signals received by the signal navigation device (290).

6. The robotic work tool system (300) according to any preceding claim,
wherein the controller is further configured to determine the boundary (320) based on the variance of the location(s) utilizing the innermost of the variance(s) by creating an inner envelope using only the innermost points of the determined boundary point(s).

7. The robotic work tool system (300) according to claim 1, wherein the controller is further configured to follow the boundary in a second direction, wherein the second direction is opposite the first direction, using the optical navigation sensor (285) to record features utilizing SLAM.

8. The robotic work tool system (300) according to claim 1 or 7, wherein the controller is further configured to follow the boundary before an installation process.

9. The robotic work tool system (300) according to claim 1 or 7, wherein the controller is further configured to follow the boundary after an installation process.

10. The robotic work tool system (300) according to claim 9 further comprising a charging station (310), wherein the controller is further configured to follow the boundary on its way to the charging station in selectively the first and the second direction.

11. The robotic work tool system (300) according to claim 10, wherein the controller is further configured to follow the boundary on its way to the charging station in selectively the first and the second direction through an area of insufficient signal reception (ISR).

12. The robotic work tool system (300) according to any preceding claim,
wherein the robotic work tool is a robotic lawnmower.

13. The robotic work tool system (300) according to any preceding claim,
wherein the robotic work tool is configured to be remote controlled by a user equipment (20).

14. A method for use in a robotic work tool system (300) comprising a robotic working tool (200), the robotic working tool (200) comprising a signal navigation device (290) and an optical navigation sensor (285), wherein the method comprises:
following an intended boundary as defined by one or more boundary points (BP) in a first direction using the optical navigation sensor (285) to record features utilizing SLAM;
determining (515) a location of at least one of the boundary points (BP);
determining (525) a variance of the location(s); and **characterized by** the method further comprising:
determining the boundary (320) based on the variance of the location(s) utilizing the innermost of the variance(s) by creating an inner envelope using intersections of tangents for variance circles, where the innermost tangent(s) is used, where a variance circle is defined as a singular variance, i.e. a circle around the boundary point's location.

15. The method of claim 14, wherein the method further comprises providing a representation (320R) of the boundary (320) through a user equipment (20), wherein the representation (320R) of the boundary (320) indicates the accuracy of at least one boundary point.

16. The method of claim 15, wherein the method further comprises receiving user input to change the at least one boundary point.

## Patentansprüche

1. Roboterarbeitswerkzeugsystem (300), das ein Roboterarbeitswerkzeug (200) umfasst, das angeordnet ist, in einem Arbeitsbereich betrieben zu werden, der durch eine Begrenzung (320) definiert ist, wobei das Roboterarbeitswerkzeug (200) eine Signalnavigationsvorrichtung (290), einen optischen Navigationssensor (285) und eine Steuerung (210) umfasst, wobei die Steuerung (210) zu Folgendem ausgelegt ist:
Folgen einer beabsichtigten Begrenzung, wie durch einen oder mehrere Begrenzungspunkte (BP) definiert, in einer ersten Richtung unter Verwendung des optischen Navigationssensors (285), um unter Verwendung von SLAM Merkmale aufzuzeichnen;
Bestimmen (515) eines Ortes von mindestens einem der Begrenzungspunkte (BP);
Bestimmen (525) einer Varianz des einen oder der mehreren Orte und **dadurch gekennzeichnet, dass** sie ferner zu Folgendem ausgelegt ist
Bestimmen der Begrenzung (320) auf Basis der Varianz des einen oder der mehreren Orte unter Verwendung der innersten der einen oder der mehreren Varianzen durch Erstellen einer inneren Hüllkurve unter Verwendung von Überschneidungen von Tangenten für Varianzkreise, wo die eine oder die mehreren innersten Tangenten verwendet werden, wo ein Varianzkreis als eine einzelne Varianz definiert ist, d. h. ein Kreis um den Ort des Begrenzungspunkts.

2. Roboterarbeitswerkzeugsystem (300) nach Anspruch 1, wobei die Steuerung ferner zu Folgendem ausgelegt ist Bestimmen der Begrenzung (320) auf Basis der Varianz des einen oder der mehreren Orte unter Verwendung der innersten der einen oder der mehreren Varianzen durch Erzeugen einer inneren Hüllkurve des mindestens einen Begrenzungspunkts (BP).

3. Roboterarbeitswerkzeugsystem (300) nach einem der vorhergehenden Ansprüche, wobei die Steuerung ferner dazu ausgelegt ist zu bestimmen (520), dass der Ort eines Begrenzungspunkts ungenau ist, und in Reaktion darauf die Varianz als die Varianz der Ungenauigkeit zu bestimmen.

4. Roboterarbeitswerkzeugsystem (300) nach einem der vorhergehenden Ansprüche, wobei die Steuerung ferner dazu ausgelegt ist, durch Bestimmen, dass sich der Begrenzungspunkt in einem Bereich eines nicht ausreichenden Signalempfangs (ISR) befindet, zu bestimmen (520), dass der Ort des Begrenzungspunkts ungenau ist.

5. Roboterarbeitswerkzeugsystem (300) nach einem der vorhergehenden Ansprüche, wobei die Steuerung ferner zu Folgendem ausgelegt ist
Bestimmen auf Basis der Anzahl von Signalen und/oder der Qualität von mindestens einem der von der Signalnavigationsvorrichtung (290) empfangenen Signale, dass ein Bereich ein Bereich eines nicht ausreichenden Signalempfangs (ISR) ist.

6. Roboterarbeitswerkzeugsystem (300) nach einem der vorhergehenden Ansprüche, wobei die Steuerung ferner dazu ausgelegt ist, die Begrenzung (320) auf Basis der Varianz des einen oder der mehreren Orte unter Verwendung der innersten der einen oder der mehreren Varianzen durch Erstellen einer inneren Hüllkurve unter Verwendung der innersten Punkte des einen oder der mehreren bestimmten Begrenzungspunkte zu bestimmen.

7. Roboterarbeitswerkzeugsystem (300) nach Anspruch 1, wobei die Steuerung ferner dazu ausgelegt ist, unter Verwendung des optischen Navigationssensors (285) der Begrenzung in eine zweite Richtung zu folgen, wobei die zweite Richtung der ersten Richtung entgegengesetzt ist, um unter Verwendung von SLAM Merkmale aufzuzeichnen.

8. Roboterarbeitswerkzeugsystem (300) nach Anspruch 1 oder 7, wobei die Steuerung ferner dazu ausgelegt ist, der Begrenzung vor einem Installationsprozess zu folgen.

9. Roboterarbeitswerkzeugsystem (300) nach Anspruch 1 oder 7, wobei die Steuerung ferner dazu ausgelegt ist, der Begrenzung nach einem Installationsprozess zu folgen.

10. Roboterarbeitswerkzeugsystem (300) nach Anspruch 9, das ferner eine Ladestation (310) umfasst, wobei die Steuerung ferner dazu ausgelegt ist, der Begrenzung auf ihrem Weg zur Ladestation selektiv in der ersten und der zweiten Richtung zu folgen.

11. Roboterarbeitswerkzeugsystem (300) nach Anspruch 10, wobei die Steuerung ferner dazu ausgelegt ist, der Begrenzung auf ihrem Weg zur Ladestation durch einen Bereich eines nicht ausreichenden Signalempfangs (ISR) selektiv in der ersten und der zweiten Richtung zu folgen.

12. Roboterarbeitswerkzeugsystem (300) nach einem der vorhergehenden Ansprüche, wobei das Roboterarbeitswerkzeug ein Roboterrasenmäher ist.

13. Roboterarbeitswerkzeugsystem (300) nach einem der vorhergehenden Ansprüche, wobei das Roboterarbeitswerkzeug dazu ausgelegt ist, von einer Teilnehmereinrichtung (20) aus der Ferne gesteuert zu werden.

14. Verfahren zur Verwendung in einem Roboterarbeitswerkzeugsystem (300), das ein Roboterarbeitswerkzeug (200) umfasst, wobei das Roboterarbeitswerkzeug (200) eine Signalnavigationsvorrichtung (290) und einen optischen Navigationssensor (285) umfasst, wobei das Verfahren Folgendes umfasst:
Folgen einer beabsichtigten Begrenzung, wie durch einen oder mehrere Begrenzungspunkte (BP) definiert, in einer ersten Richtung unter Verwendung des optischen Navigationssensors (285), um unter Verwendung von SLAM Merkmale aufzuzeichnen;
Bestimmen (515) eines Ortes von mindestens einem der Begrenzungspunkte (BP);
Bestimmen (525) einer Varianz des einen oder der mehreren Orte und **dadurch gekennzeichnet, dass** das Verfahren ferner Folgendes umfasst:
Bestimmen der Begrenzung (320) auf Basis der Varianz des einen oder der mehreren Orte unter Verwendung der innersten der einen oder der mehreren Varianzen durch Erstellen einer inneren Hüllkurve unter Verwendung von Überschneidungen von Tangenten für Varianzkreise, wo die eine oder die mehreren innersten Tangenten verwendet werden, wo ein Varianzkreis als eine einzelne Varianz definiert ist, d. h. ein Kreis um den Ort des Begrenzungspunkts.

15. Verfahren nach Anspruch 14, wobei das Verfahren ferner das Bereitstellen einer Repräsentation (320R) der Begrenzung (320) durch eine Teilnehmereinrichtung (20) umfasst, wobei die Repräsentation (320R) der Begrenzung (320) die Genauigkeit von mindestens einem Begrenzungspunkt anzeigt.

16. Verfahren nach Anspruch 15, wobei das Verfahren ferner das Empfangen einer Benutzereingabe zum Ändern des mindestens einen Begrenzungspunkts umfasst.

## Revendications

1. Système d'outil de travail robotique (300) comprenant un outil de travail robotique (200) agencé pour fonctionner dans une zone de travail définie par une limite (320), l'outil de travail robotique (200) comprenant un dispositif de navigation de signal (290), un capteur de navigation optique (285), et un dispositif de commande (210), dans lequel le dispositif de commande (210) est configuré pour :
suivre une limite prévue telle que définie par un ou plusieurs points de limite (BP) dans une première direction au moyen du capteur de navigation optique (285) pour enregistrer des caractéristiques utilisant SLAM ;
déterminer (515) un emplacement d'au moins l'un des points de limite (BP) ;
déterminer (525) une variance du ou des emplacements ; et
**caractérisé en ce qu'**il est en outre configuré pour déterminer la limite (320) sur la base de la variance du ou des emplacements au moyen de la ou des variances les plus internes par la création d'une enveloppe interne au moyen d'intersections de tangentes pour des cercles de variance, dans lequel la ou les tangentes les plus internes sont utilisées, dans lequel un cercle de variance est défini comme une variance singulière, c'est-à-dire un cercle autour de l'emplacement du point de limite.

2. Système d'outil de travail robotique (300) selon la revendication 1, dans lequel le dispositif de commande est en outre configuré pour
déterminer la limite (320) sur la base de la variance du ou des emplacements à l'aide de la plus interne de la ou des variances par la génération d'une enveloppe interne de l'au moins un point de limite (BP).

3. Système d'outil de travail robotique (300) selon l'une quelconque des revendications précédentes, dans lequel le dispositif de commande est en outre configuré pour déterminer (520) que l'emplacement d'un point de limite est inexact et en réponse, déterminer la variance en tant que variance de l'inexactitude.

4. Système d'outil de travail robotique (300) selon l'une quelconque des revendications précédentes, dans lequel le dispositif de commande est en outre configuré pour déterminer (520) que l'emplacement du point de limite est inexact par la détermination du fait que le point limite est dans une zone de réception de signal insuffisante (ISR).

5. Système d'outil de travail robotique (300) selon l'une quelconque des revendications précédentes, dans lequel le dispositif de commande est en outre configuré pour
déterminer qu'une zone est une zone de réception de signal insuffisante (ISR) sur la base du nombre de signaux et/ou de la qualité d'au moins l'un des signaux reçus par le dispositif de navigation de signal (290).

6. Système d'outil de travail robotique (300) selon l'une quelconque des revendications précédentes, dans lequel le dispositif de commande est en outre configuré pour déterminer la limite (320) sur la base de la variance du ou des emplacements à l'aide de la plus interne de la ou des variances par la création d'un enveloppe interne uniquement au moyen des points les plus internes du ou des points de limite déterminés.

7. Système d'outil de travail robotique (300) selon la revendication 1, dans lequel le dispositif de commande est en outre configuré pour suivre la limite dans une seconde direction, dans lequel la seconde direction est opposée à la première direction, au moyen du capteur de navigation optique (285) pour enregistrer des caractéristiques utilisant SLAM.

8. Système d'outil de travail robotique (300) selon la revendication 1 ou 7, dans lequel le dispositif de commande est en outre configuré pour suivre la limite avant un processus d'installation.

9. Système d'outil de travail robotique (300) selon la revendication 1 ou 7, dans lequel le dispositif de commande est en outre configuré pour suivre la limite après un processus d'installation.

10. Système d'outil de travail robotique (300) selon la revendication 9, comprenant en outre une station de charge (310), dans lequel le dispositif de commande est en outre configuré pour suivre la limite sur son chemin vers la station de charge dans la première et la seconde direction de façon sélective.

11. Système d'outil de travail robotique (300) selon la revendication 10, dans lequel le dispositif de commande est en outre configuré pour suivre la limite sur son chemin vers la station de charge dans la première et la seconde direction de façon sélective à travers une zone de réception de signal insuffisante (ISR).

12. Système d'outil de travail robotique (300) selon l'une quelconque des revendications précédentes, dans lequel l'outil de travail robotique est une tondeuse à gazon robotique.

13. Système d'outil de travail robotique (300) selon l'une quelconque des revendications précédentes, dans lequel l'outil de travail robotique est configuré pour être commandé à distance par un équipement utilisateur (20) .

14. Procédé à utiliser dans un système d'outil de travail robotique (300) comprenant un outil de travail robotique (200), l'outil de travail robotique (200) comprenant un dispositif de navigation de signal (290) et un capteur de navigation optique (285), dans lequel le procédé comprend :
le suivi d'une limite prévue telle que définie par un ou plusieurs points de limite (BP) dans une première direction au moyen du capteur de navigation optique (285) pour enregistrer des caractéristiques utilisant SLAM ;
la détermination (515) d'un emplacement d'au moins l'un des points de limite (BP) ;
la détermination (525) d'une variance du ou des emplacements ; et
**caractérisé en ce que** le procédé comprend en outre :
la détermination de la limite (320) sur la base de la variance du ou des emplacements au moyen de la ou des variances les plus internes par la création d'une enveloppe interne au moyen d'intersections de tangentes pour des cercles de variance, dans lequel la ou les tangentes les plus internes sont utilisées, dans lequel un cercle de variance est défini comme une variance singulière, c'est-à-dire un cercle autour de l'emplacement du point de limite.

15. Procédé selon la revendication 14, dans lequel le procédé comprend en outre la fourniture d'une représentation (320R) de la limite (320) par l'intermédiaire d'un équipement utilisateur (20), dans lequel la représentation (320R) de la limite (320) indique l'exactitude d'au moins un point de limite.

16. Procédé selon la revendication 15, dans lequel le procédé comprend en outre la réception d'une entrée d'utilisateur pour modifier l'au moins un point de limite.
